(19) Europäisches Patentamt / European Patent Office / Office européen des brevets

(11) **EP 1 767 831 B1**

(12) **EUROPEAN PATENT SPECIFICATION**

(45) Date of publication and mention
of the grant of the patent:
**26.10.2011 Bulletin 2011/43**

(21) Application number: **05765446.9**

(22) Date of filing: **28.06.2005**

(51) Int Cl.:
*F16H 63/18* (2006.01)    *F16H 61/28* (2006.01)

(86) International application number:
**PCT/JP2005/011803**

(87) International publication number:
**WO 2006/003878 (12.01.2006 Gazette 2006/02)**

(54) **SHIFT CONTROL DEVICE FOR SADDLE-RIDING-TYPE VEHICLE, AND SADDLE-RIDING-TYPE VEHICLE**

SCHALTSTEUERVORRICHTUNG FÜR ZWEIRADFAHRZEUG UND ZWEIRADFAHRZEUG

DISPOSITIF DE COMMANDE DE CHANGEMENT VITESSES POUR VÉHICULE À SELLE ET TYPE DE VÉHICULE À SELLE

(84) Designated Contracting States:
**AT BE BG CH CY CZ DE DK EE ES FI FR GB GR HU IE IS IT LI LT LU MC NL PL PT RO SE SI SK TR**

(30) Priority: **01.07.2004 JP 2004195632**

(43) Date of publication of application:
**28.03.2007 Bulletin 2007/13**

(73) Proprietor: **Yamaha Hatsudoki Kabushiki Kaisha Iwata-shi, Shizuoka 438-8501 (JP)**

(72) Inventors:
• **Kosugi, Makoto**
**c/o Yamaha Hatsudoki Kabushiki Kaisha Iwata-shi, Shizuoka 438-8501 (JP)**

• **Murayama, Takuji**
**c/o Yamaha Hatsudoki Kabushiki Kaisha Iwata-shi, Shizuoka 438-8501 (JP)**

(74) Representative: **Grünecker, Kinkeldey, Stockmair & Schwanhäusser Leopoldstrasse 4 80802 München (DE)**

(56) References cited:
EP-A- 0 579 532      EP-A- 1 138 546
GB-A- 2 394 023      JP-A- 3 172 675
JP-A- 5 039 865      JP-A- 8 061 487
JP-A- 61 024 858     JP-A- 2000 205 411
JP-A- 2001 280 493   US-B1- 6 220 109

**Description**

The present invention relates to a straddle-type vehicle comprising a shift control device. Prior art document EP-A-1 138 546 discloses a straddle-type vehicle according to the preamble of claim 1, comprising a transmission with a shift drum, which is typical for a motorbike.

In some electric shift control devices, a conventional foot-operated shift pedal is not used, but an electric motor (shift actuator) is actuated based on a speed change command signal output from a shift switch to rotate the shift shaft of a transmission for shift change.

In the case of shift change using a foot-operated shift pedal, when a dog in the transmission cannot be disengaged or engaged smoothly, repeated shift operations can eventually complete the shift change. However, with an electric shift control device, when a dog cannot be disengaged or engaged smoothly, smooth shift change cannot occasionally be made.

In an attempt to address such a problem, a method has been proposed to feed back the angle of a shift cam to adjust the operation angle of the shift actuator. This method has the problem of slow shift speed and complexity of the device.

To operate the shift actuator to a predetermined angle in a predetermined period, the shift actuator keeps operating even during abutment of the dog, and hence it is not possible to prevent the dog from rotating with the operation of the shift actuator. It is possible to prevent the dog from rotating with the operation of the shift actuator by, for example, interposing a spring mechanism between the shift actuator and the shift shaft. However, if the load required to disengage the dog cannot be obtained with the spring, the dog cannot be disengaged. In addition, the stroke amount of the shift actuator needs to be increased, and the shift speed is made slower.

In view of the foregoing issues, Patent Document 1 discloses a technique for providing a lost motion mechanism constituted of an elastic member between the electric motor and the shift shaft. This lost motion mechanism is interposed between a speed reduction gear mechanism, which is provided between the output shaft and the shift drum shaft of the electric motor, and the shift shaft to prevent the electric motor from being overloaded. After the elastic member is overloaded and hence elastically deformed, when the shift shaft is rotationally driven by the resilient force, the shift shaft can be rotationally driven smoothly without the influence of the inertial mass of the speed reduction gear mechanism, which allows smooth speed change shift operation.

Incidentally, Patent Document 2 discloses a technique for achieving smooth shift change using a foot-operated shift pedal, though not related to an electric shift control device. Specifically, a coupling mechanism is disconnected at a portion between the shift pedal and the shift shaft, and both the disconnected ends are linked via an elastic member with play equivalent to half the stroke of the shift pedal. With this structure, the dog can be disengaged with operation force of the shift pedal directly applied thereto, and can be engaged always by the elastic force of the elastic member, which allows smooth shift change.

Patent Document 1: JP-B-3044498 (JP-A-5039865)
Patent Document 2: JP-Y-Sho 43-11555

Conventional elastic members, however, are disposed in the engine case, for example, in the case of Patent Document 1, between a reduced speed output gear, which is located at the final speed reduction end of the speed reduction gear mechanism, and the shift shaft, and in the case of Patent Document 2, between a pedal shaft and a change arm, and hence an existing structure cannot be utilized and high maintenance, etc. is required.

It is an object of the present invention to provide a shift control device for a straddle-type vehicle allowing smooth shift change and utilizing an existing structure, and which can be easily adapted to any type of straddle-type vehicle.
According to the present invention said object is solved by a straddle-type vehicle having the features of independent claim 1. Preferred embodiments are laid down in the dependent claims.

Accordingly, it is provided a straddle-type vehicle with a shift control device for performing shift control in which a shift actuator is stroked by a predetermined amount to rotate a shift shaft, and a dog is engaged and disengaged by the rotation of the shift shaft. The device includes: a transmission mechanism including: a first coupling part and a second coupling part coupled for movement relative to each other; an urging means for urging the first and second coupling parts toward a neutral position; and a stopper mechanism for stopping the relative movement of the first or second coupling part when the first or second coupling part is moved relatively from the neutral position against urging force of the urging means. The transmission mechanism is disposed outside an engine case and interposed between the shift actuator and the shift shaft.

The transmission mechanism is arranged such that, when resistive force acts against movement of the transmission mechanism: the first or second coupling part moves relatively against the urging force of the urging means until the first or second coupling part is stopped by the stopper mechanism; and then the first and second coupling parts move together.

In a preferred embodiment, the urging means includes a first urging means disposed in the first coupling part and a second urging means disposed in the second coupling part, and the stopper mechanism includes a first stopper mechanism for stopping relative movement of the first coupling part and a second stopper mechanism for stopping relative movement of the second coupling part.

Preferably, the urging force of the first urging means and the urging force of the second urging means are equal to each other.

In a preferred embodiment, the first and second coupling parts are coupled for movement relative to each other in sliding directions.

In a preferred embodiment, the urging means includes a compression spring.

In a preferred embodiment, the first and second coupling parts are coupled for movement relative to each other in rotating directions.

In a preferred embodiment, the urging means includes a pine needle-like spring.

In a preferred embodiment, the transmission mechanism is disposed on the shift shaft.

In a preferred embodiment, the transmission mechanism is disposed on a rotation axis of a gear of a speed reduction mechanism coupled to the shift actuator.

In a preferred embodiment, the shift actuator is coupled to the shift shaft via a coupling mechanism for transmitting actuation force of the shift actuator; and the transmission mechanism is held by the coupling mechanism.

In a preferred embodiment, the transmission mechanism is provided in a case held by the coupling mechanism.

In a preferred embodiment, the shift actuator is coupled to the shift shaft via a coupling mechanism for transmitting actuation force of the shift actuator; and the coupling mechanism is of adjustable length.

The present invention provides a straddle-type vehicle incorporating the shift control device constructed as described above.

Effect of the Invention

The shift control device for a straddle-type vehicle of the present invention allows smooth shift change even when disengagement of the dog is difficult or dog abutment occurs during engagement of the dog.

The transmission mechanism described above can be disposed outside an engine case which includes the shift shaft. In this way, the transmission mechanism can be provided without the need to modify the inside of the engine case and can be easily maintained.

Brief Description of Drawings

FIGs. 1(a) and 1(b) are conceptual diagrams showing the basic structure of a shift control device for a straddle-type vehicle according to the present invention.

FIGs. 2 (a) to 2 (e) show how a transmission mechanism 10 operates when a shift actuator is stroked by a predetermined amount in the present invention.

FIGs. 3(a) to 3(g) show a specific structure and operation of the transmission mechanism 10 in the present invention.

FIG. 4 is a graph showing the rotational angle of a shift shaft versus the stroke length of the shift actuator.

FIG. 5 shows how a neutral position is set using coil springs of different urging forces.

FIG. 6 is a side view of a two-wheeled motor vehicle in the present invention.

FIG. 7 is a plan view of an engine provided with the shift actuator, etc., in the present invention.

FIG. 8 is a side view of the engine provided with the shift actuator, etc., in the present invention.

FIG. 9 is an exploded perspective view of a transmission mechanism in the present invention.

FIG. 10 shows the developed shape of grooves in a shift cam in the present invention.

FIG. 11 is a side view of the shift actuator, etc., in the present invention.

FIG. 12 is a perspective view of an actuation force transmission mechanism in the present invention.

FIG. 13 is another perspective view of the actuation force transmission mechanism in the present invention, viewed from a direction different from that in FIG. 12.

FIG. 14 is a front view of the actuation force transmission mechanism in the present invention, viewed from the direction of the arrow A in FIG. 12.

FIG. 15 is a right side view corresponding to FIG. 14.

FIG. 16 is a plan view corresponding to FIG. 14.

FIG. 17 is a block diagram showing an engine control unit, etc., in the present invention.

FIG. 18 shows an actuation force transmission mechanism according to another embodiment of the present invention in a normal state, in which FIG. 18 (a) is a plan view of the actuation force transmission mechanism, FIG. 18(b) is a sectional view taken along the line B-B of FIG. 18(a), and FIG. 18(c) is a sectional view taken along the line C-C of FIG. 18(a).

FIG. 19 shows the actuation force transmission mechanism according to the another embodiment of the present invention in the shortest state, in which FIG. 19(a) is a plan view of the actuation force transmission mechanism, and FIG. 19(b) is a sectional view corresponding to FIG. 19(a).

FIG. 20 shows the actuation force transmission mechanism according to the another embodiment of the present invention in the longest state, in which FIG. 20(a) is a plan view of the actuation force transmission mechanism, and FIG. 20(b) is a sectional view corresponding to FIG. 20(a).

FIG. 21 shows the actuation force transmission mechanism according to the another embodiment of the present invention in a divided state.

FIG. 22 shows the structure of a stopper member in another embodiment of the present invention.

FIGs. 23(a) and 23(b) show the structure of the stopper member in still another embodiment of the present invention.

Description of Reference Numerals and Symbols

| 10: | transmission mechanism |
| 11a: | first coupling part |
| 11b: | second coupling part |
| 12: | urging means |
| 12a: | first urging means (coil spring) |
| 12b: | second urging means (coil spring) |
| 13: | stopper mechanism |
| 13a: | first stopper mechanism (stopper member) |
| 13b: | second stopper mechanism (stopper member) |
| 15: | support member |
| 16a: | first opening |
| 16b: | second opening |
| 151: | engine |
| 152: | engine case |
| 155: | speed change mechanism |
| 156: | shift fork |
| 157: | slide rod |
| 158: | shift cam |
| 159: | shift shaft |
| 160: | ratchet mechanism |
| 161: | shift arm |
| 162: | stopper plate |
| 164: | actuation force transmission mechanism |
| 165: | shift actuator |
| 166 : | pinion gear |
| 167 : | coupling rod |
| 170 : | rotary frame (first coupling part) |
| 171: | pine needle-like spring (urging means) |
| 172: | support bar |
| 174 : | fixed lever (second coupling part) |
| 177 : | actuation force transmission mechanism |
| 179 : | first coupling part |
| 180: | second coupling part |
| 181: | coil spring (urging means) |

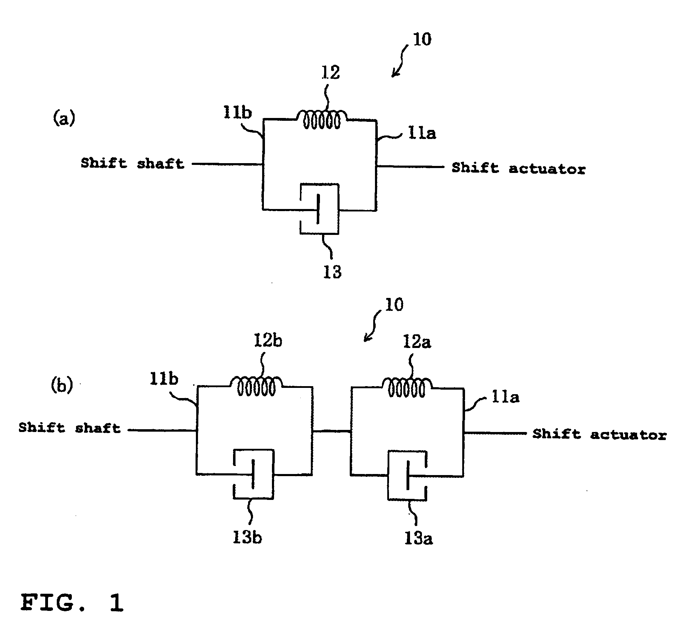

Before starting the description of specific structures of a shift control device for a straddle-type vehicle of the present invention, the basic concept of the present invention is first described with reference to FIGs. 1 to 3.

FIGs. 1(a) and 1(b) are conceptual diagrams showing the basic structure of the shift control device for a straddle-type vehicle of the present invention.

FIG. 1(a) is a conceptual diagram showing a transmission mechanism 10 interposed between a shift actuator and a shift shaft in the shift control device of the present invention. Normally, the shift actuator is coupled to the shift shaft through a coupling rod or the like. The shift actuator is stroked by a predetermined amount to rotate the shift shaft. The rotation of the shift shaft engages and disengages a dog to control shift change. The transmission mechanism 10 is disposed at an intermediate portion of the coupling rod.

As shown in FIG. 1(a), the transmission mechanism 10 includes a first coupling part 11a and a second coupling part 11b coupled for movement relative to each other, an urging means 12 for urging the first and second coupling parts 11a, 11b toward a neutral position, and a stopper mechanism 13 for stopping relative movement of the first or second coupling part 11a, 11b when they move relative to each other from the neutral position against the urging force of the urging means 12.

A transmission mechanism 10 shown in FIG. 1(b) has a structure similar to that shown in FIG. 1(a), but is provided with an urging means 12 and a stopper mechanism 13 for each of first and second coupling parts 11a, 11b. The first coupling part 11a is provided with a first urging means 12a and a first stopper mechanism 13a for stopping relative movement of the first coupling part 11a, while the second coupling part 11b is provided with a second urging means 12b and a second stopper mechanism 13b for stopping relative movement of the second coupling part 11b.

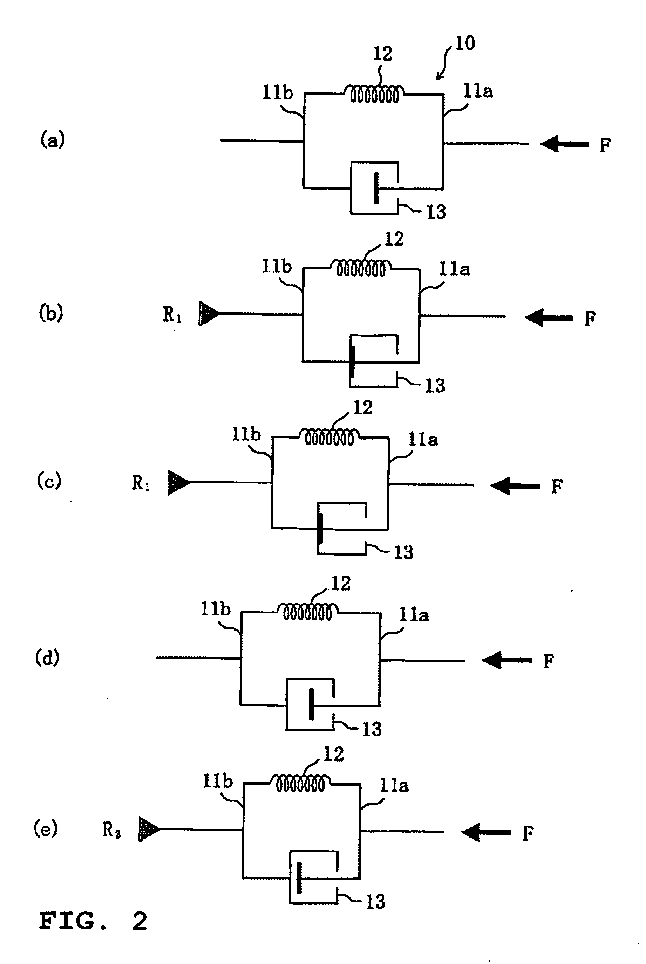

Now, the operation of the above transmission mechanism 10 is described with reference to FIGs. 2 (a) to 2 (e). The operation of the transmission mechanism 10 shown in FIG. 1 (b) is basically the same as that of the transmission mechanism 10 shown in FIG. 1(a), and hence only the latter is described here.

FIGs. 2(a) to 2(e) show how the transmission mechanism 10 operates when the shift actuator is stroked by a predetermined amount.

FIG. 2(a) shows a state in which the first coupling part 11a and the second coupling part 11b are held at the neutral position of the transmission mechanism 10 by the urging force of the urging means 12. After the shift actuator is stroked by a predetermined amount and a shift up or a shift down is completed, the shift actuator returns to a predetermined position. If the neutral position is deviated at that time, however, the dog is disengaged and engaged at deviated positions by the rotation of the shift shaft at the next shift up or shift down, which may hinder smooth shift change. Thus, the urging force of the urging means 12 needs to be preset such that the neutral position will be prevented from deviating.

When the shift actuator in this state is actuated based on a gear change command signal and starts being stroked by a predetermined amount, actuation force F1 in the direction of the arrow is applied to the transmission mechanism 10 from the shift actuator side (the right side of the drawing) as shown in FIG. 2(a). At this time, when some resistive force R1 (which will be described specifically later) acts against movement of the transmission mechanism 10 on the shift shaft side of the transmission mechanism 10, the urging means 12 (e.g. a compression spring) is compressed and as a result, the first coupling part 11a moves relatively from the neutral position as shown in FIG. 2(b). The first coupling part 11a moves relatively against the urging means 12 until it is stopped by the stopper mechanism 13 as shown in FIG. 2(b).

When the relative movement of the first coupling part 11a is stopped, then the first coupling part 11a and the second coupling part 11b move together as shown in FIG. 2(c). At this time, the transmission mechanism 10 moves in as it were a "rigid" state and hence can move against the resistive force R1 to effectively rotate the shift shaft.

When the resistive force R1 is no longer applied against the movement of the transmission mechanism 10 as shown in FIG. 2(d), the urging force of the urging means 12 urges the first coupling part 11a toward the neutral position, and the transmission mechanism 10 keeps moving as the shift actuator is stroked.

Then, when some resistive force R2 (which will be described specifically later) acts against the movement of the transmission mechanism 10 again, the urging means 12 is compressed as shown in FIG. 2(e), and as a result the first coupling part 11a moves relatively against the urging means 12 to a point before it is stopped by the stopper mechanism 13 in the same way as in FIG. 2(b). When the relative movement of the first coupling part 11a is stopped, the second coupling part 11b is urged by the urging means 12 against the resistive force R2. Without the resistive force R2, the second coupling part 11b is moved by the urging force of the urging means 12.

As described above, when some resistive force acts against movement of the transmission mechanism 10 in which the first coupling part 11a and the second coupling part 11b are coupled to each other, the urging means 12 and the stopper mechanism 13 work in conjunction with each other to relatively move the first coupling part 11a (or the second coupling part 11b) for a certain period in order to relieve the resistive force. After the certain period, the first coupling part 11a and the second coupling part 11b move together to allow the actuation force of the shift actuator to act directly on the shift shaft.

The above description describes a typical example of the operation of the transmission mechanism 10. The operation of the transmission mechanism 10 may vary depending on the magnitude and duration of resistive force which acts on the transmission mechanism 10, the stroke length of the shift actuator, etc.

For example, in the case where the resistive force R1 is applied to the transmission mechanism 10 of the above example for only a short period, the compression of the urging means 12 may not move the first coupling part 11a relatively before it is stopped by the stopper mechanism 13, but may allow the first coupling part 11a to return toward the neutral position when the resistive force R1 is no longer applied.

In the case where the shift actuator is stroked in the opposite direction, the transmission mechanism 10 basically performs the same operation as shown in FIGs. 2 (a) to 2(e) since the transmission mechanism 10 has a symmetrical structure with respect to the neutral position.

In the operation of the transmission mechanism 10 of the above example, the first coupling part 11a and the second coupling part 11b are coupled so as to be movable relative to each other in sliding directions. However, the first coupling part 11a and the second coupling part 11b may be coupled so as to be movable relative to each other in rotating directions.

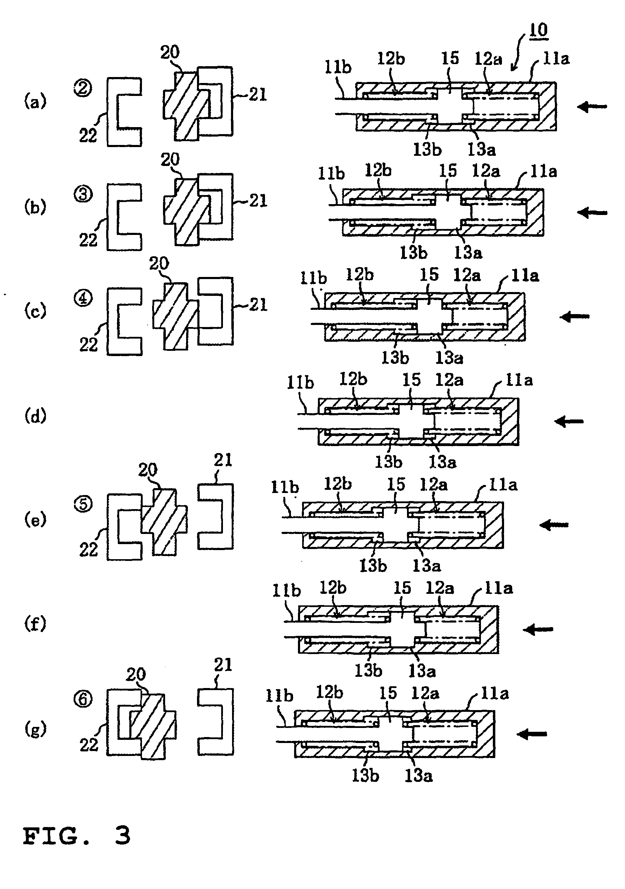

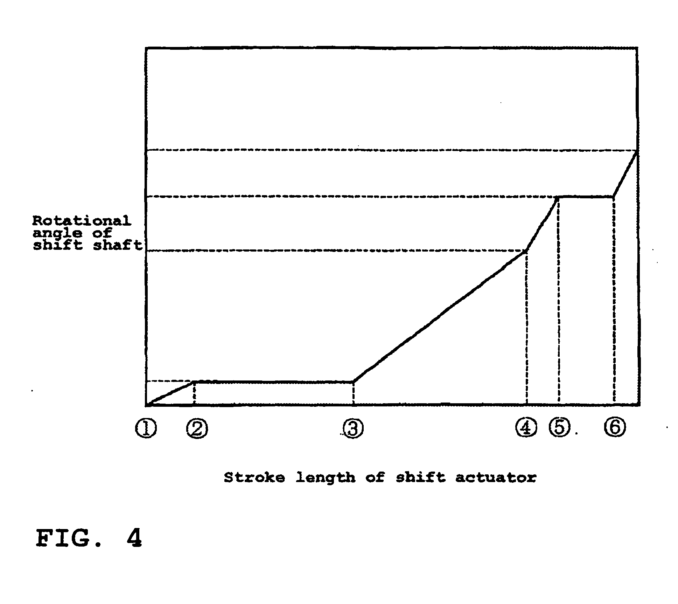

The foregoing describes the conceptual structure and operation of the transmission mechanism 10. Now, a specific structure and operation of the transmission mechanism 10 are described in association with actual engagement and disengagement of the dog with reference to FIGs. 3 and 4.

FIGs. 3(a) to 3(g) show the operation of the transmission mechanism 10 and the operation of a dog mechanism. FIG. 4 shows the rotational angle of the shift shaft versus the stroke length of the shift actuator. The transmission mechanism 10 described here has an urging mechanism and a stopper mechanism separately for the first and second coupling parts. However, its basic operation is the same as a transmission mechanism with one urging means and one stopper mechanism.

The right side of FIG. 3(a) shows the transmission mechanism 10 with the first coupling part 11a and the second coupling part 11b held in the neutral position, and the left side of FIG. 3(a) shows the dog mechanism with a dog 20 engaged with a gear 21.

The first coupling part 11a of the transmission mechanism 10 is inserted into an opening of and thus slidably coupled to the second coupling part 11b. A first coil spring 12a as an urging means and a first stopper member 13a are disposed in an opening of the first coupling part 11a. Likewise, a second coil spring 12b as an urging means and a second stopper member 13b are disposed in an opening of the second coupling part 11b.

When a gear change command signal is input to the shift actuator in this state, the shift actuator starts being stroked by a predetermined amount. The shift shaft normally has "play" and thus rotates by the play when the shift actuator is first stroked (number 1 to 2 on the horizontal axis of FIG. 4).

As the shift actuator is further stroked, disengagement of the dog starts. Since frictional force of the dog 20 in engagement with the gear 21 acts as resistive force against the movement of the shift actuator as shown in FIG. 3(b), the transmission mechanism 10 interposed between the shift actuator and the shift shaft operates in such a way that: the first coil spring 12a provided in the first coupling part 11a is compressed, and as a result the second coupling part 11b moves relatively from the neutral position.

The second coupling part 11b moves relatively against the first coil spring 12a until the first stopper mechanism 13a comes in contact with the sidewall of a support member 15 of the second coupling part 11b. The shift shaft does not rotate as the shift actuator is stroked during this stage of stroke (number 2 to 3 on the horizontal axis of FIG. 4).

When the relative movement of the second coupling part 11b is stopped, then the first coupling part 11a and the second coupling part 11b move together as shown in FIG. 3(c). At this time, since the transmission mechanism 10 moves in as it were a "rigid" state, the actuation force of the shift actuator is applied directly to the shift shaft and exceeds the above-described frictional force so that the dog 20 disengages from the gear 21 during this stage of stroke (number 3 to 4 on the horizontal axis of FIG. 4).

When the dog 20 is completely disengaged, frictional force of the dog 20 no longer exists. Thus, the urging force of the first coil spring 12a returns the second coupling part 11b toward the neutral position as shown in FIG. 3(d). After the dog 20 is disengaged, the shift shaft rotates with almost no resistive force acting against the movement of the transmission mechanism 10 (number 4 to 5 on the horizontal axis of FIG. 4).

Then, as shown in FIG. 3(e), resistive force due to abutment of the dog acts against the movement of the shift actuator when the dog 20 engages with a gear 22. Again, as shown in FIG. 3(f), the first coil spring 12a provided in the first coupling part 11a is compressed, and as a result the second coupling part 11b moves relatively from the neutral position. In the abutment of the dog, small urging force of the first coil spring 12a acts on the dog 20, and allows the dog 20 to engage with the gear 22 smoothly (number 5 to 6 on the horizontal axis of FIG. 4). When the dog 20 is completely engaged with the gear 22, there no longer exists resistive force as shown in FIG. 3 (g) . Thus, the urging force of the first coil spring 12a returns the second coupling part 11b toward the neutral position.

Preferably, a gap may be provided so that the second coupling part 11b will move relatively not to be stopped by the first stopper mechanism 13a when the shift actuator is fully stroked and in the abutment of the dog, as shown in FIG. 3(f).

In the shift control device of the present invention described above, the transmission mechanism 10 including a first coupling part 11a and a second coupling part 11b coupled for movement relative to each other is interposed between the shift actuator and the shift shaft. When the shift actuator is stroked by a predetermined amount, the dog is compulsorily disengaged as the first and second coupling parts are moved together by means of the stopper mechanism 13 (13a, 13b), and engaged (in the abutment of the dog) as the first or second coupling part is moved relatively against the urging force of the urging means 12 (12a, 12b). This allows smooth shift change.

In the above description, the dog is disengaged as the first and second coupling parts move together. However, it should be understood that the dog can be successfully disengaged as the first or second coupling part moves relatively in the case where frictional force of the dog is small.

The transmission mechanism 10 described above has an independent structure and hence can be disposed outside an engine case which includes the shift shaft. In this way, the transmission mechanism 10 can be provided without the need to modify the inside of the engine case and can be easily maintained.

In addition, the transmission mechanism 10 described above can be easily disposed outside the engine case when the transmission mechanism 10 is held by a coupling mechanism (a mechanism for transmitting actuation force of the shift actuator to the shift shaft; for example, a coupling rod, a speed reduction mechanism, etc.) coupled to the shift actuator and the shift shaft. Further, the transmission mechanism 10 described above can be effectively protected from water and dust by disposing it in a case held by the coupling mechanism.

The shift actuator may be coupled to the shift shaft via a coupling mechanism of adjustable length for transmitting actuation force of the shift actuator.

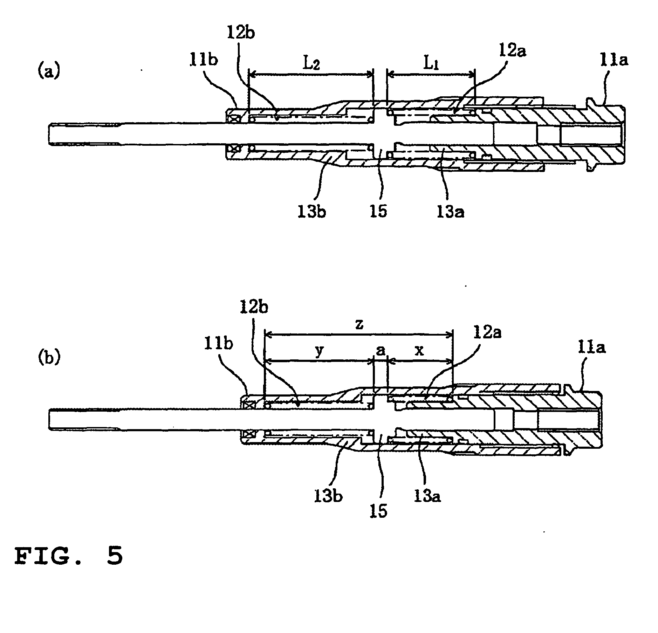

In the case where the urging forces of the first and second coil springs 12a, 12b provided in the first coupling part 11a and the second coupling part 11b are the same in the transmission mechanism 10 shown in FIG. 3, the neutral position can be set comparatively easily. However, in the case where the urging forces are intentionally different, the neutral position must be set carefully. Now, description will be made of how the neutral position is set using coil springs 12a, 12b of different urging forces with reference to FIG. 5.

As shown in FIG. 5(a), the free length of the first coil spring 12a (spring constant: N1) provided in the first coupling part 11a is defined as L1, and the free length of the second coil spring 12b (spring constant: N2) provided in the second coupling part 11b is defined as L2. Assuming that the first coupling part 11a and the second coupling part 11b of FIG. 5 (b) are in the neutral position, and also the lengths of the first coil spring 12a and the second coil spring 12b are respectively x and y, the following equations hold true:

$$x + y + a = z \quad (1)$$

$$N1 \times (L1 - x) = N2 \times (L2 - y) \quad (2)$$

The length x of the first coil spring 12a and the length y of the second coil spring 12b can be determined by solving these simultaneous equations (1), (2).

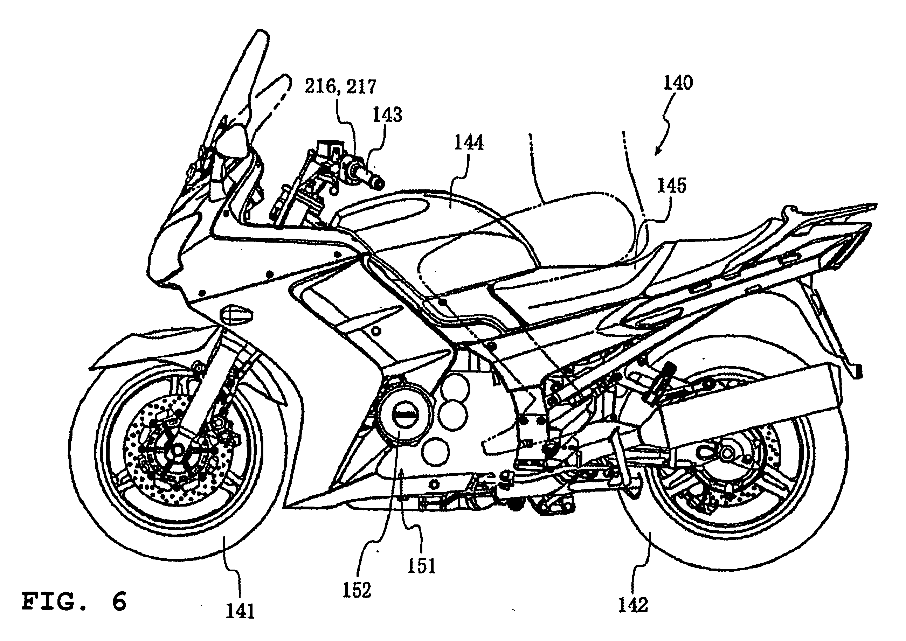

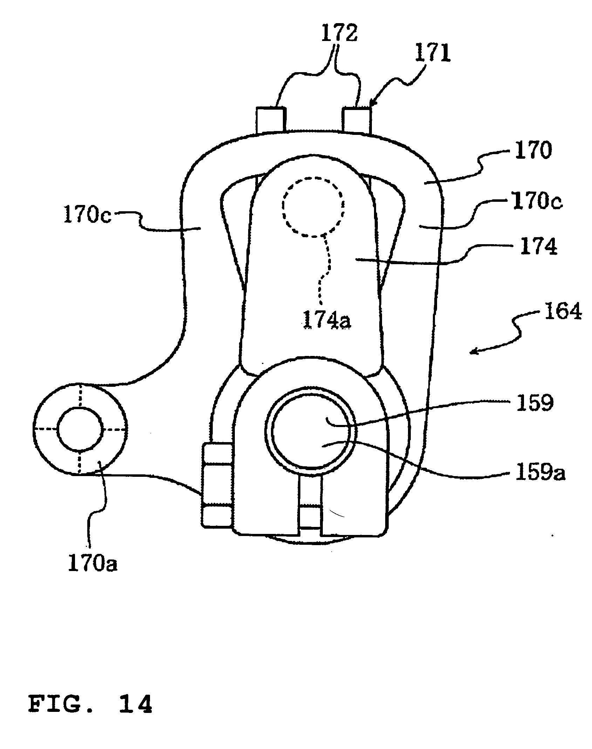

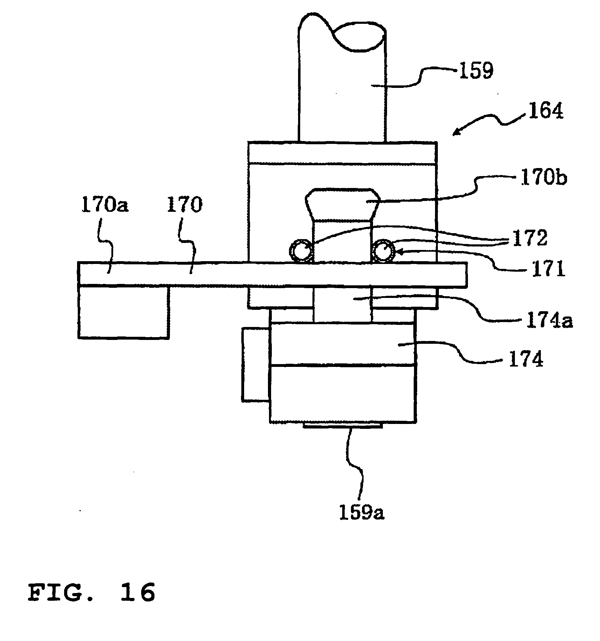

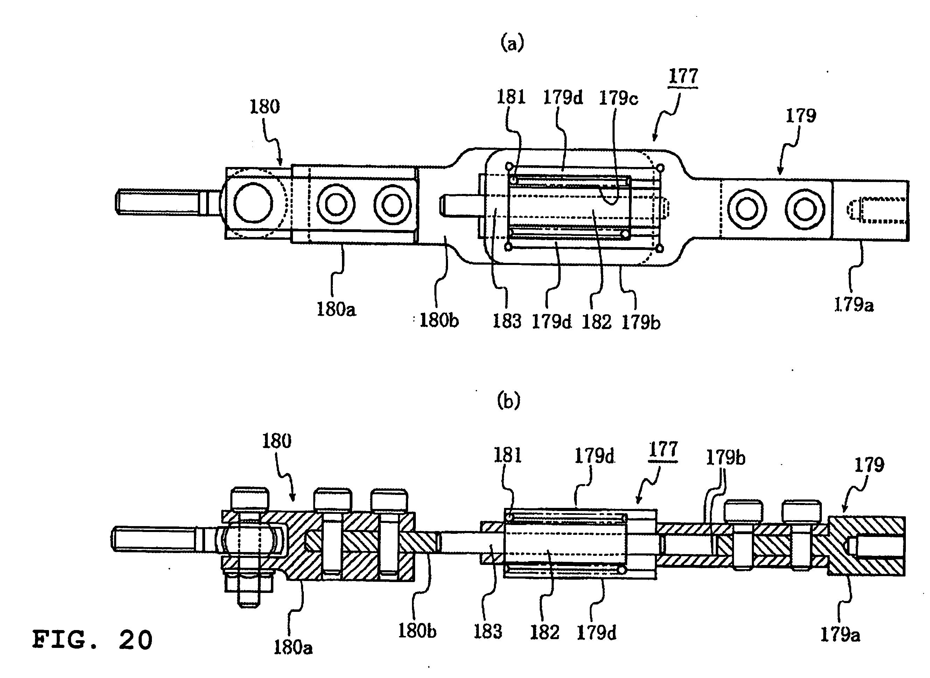

The basic structure of the shift control device for a straddle-type vehicle according to the present invention has been described above. Hereinafter, specific structures and operations of the shift control device will be described in detail with reference to FIGs. 6 to 23.

FIGs. 6 to 17 show a specific structure of the shift control device of the present invention. In FIG. 6, reference numeral 140 denotes a two-wheeled motor vehicle as a "straddle-type vehicle", provided with a front wheel 141 on its front side, a rear wheel 142 on its rear side, a fuel tank 144 in rear of handlebars 143, a seat 145 in rear of the fuel tank 144, and an engine 151 supported by a body frame below the fuel tank 144 and the seat 145.

A transmission (not shown) is disposed in an engine case 152 for the engine 151. The transmission has four to six speeds and adopts a dog clutch. Power from a crankshaft of the engine 151 is transmitted to a main axle, and then to a drive axle via gears and dogs for respective speeds.

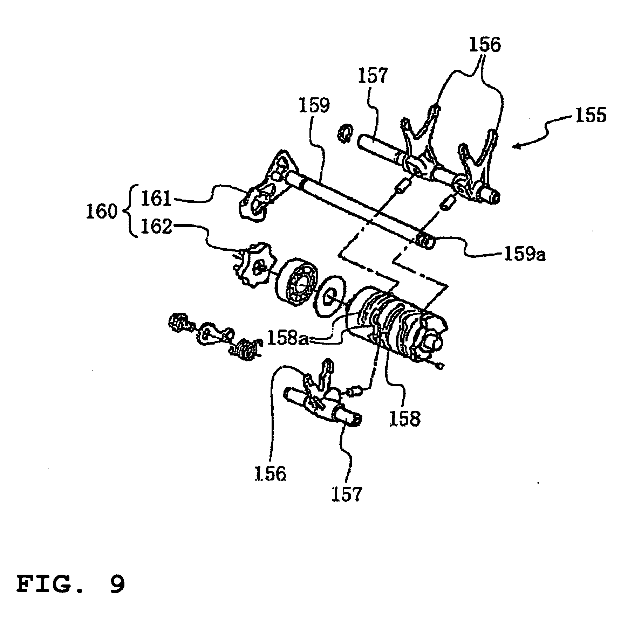

Speed change operation of the transmission is achieved by a speed change mechanism 155 such as shown in FIG. 9. The speed change mechanism 155 includes shift forks 156 for regularly moving slide gears of the transmission, slidably mounted on a slide rod 157, and a rotatable shift cam 158 for sliding the shift forks 156.

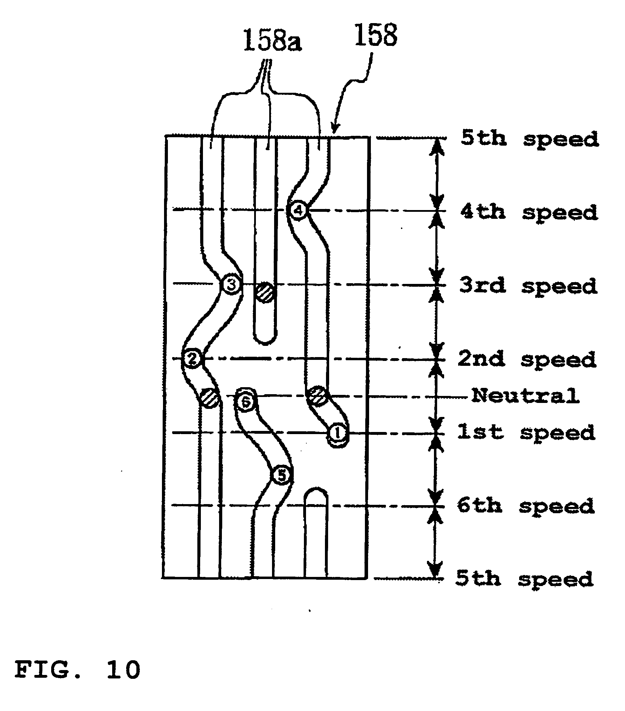

Cam grooves 158a are formed on the periphery of the shift cam 158. When developed, the cam grooves 158a are formed as shown in FIG. 10. The shift forks 156 are adapted to slide along the cam grooves 158a.

The shift cam 158 rotates via a ratchet mechanism 160 as a shift shaft 159 rotates. The ratchet mechanism 160 rotates the shift cam 158 with constant intervals (by a constant angle) to move the shift forks 156 regularly, or in other words has a ratchet function for both forward and reverse directions to change one gear at a time. A shift arm 161 of the ratchet mechanism 160 transmits rotation of the shift shaft 159, and also restricts the stroke of shift shaft 159 to prevent the shift cam 158 from overrunning. A stopper plate 162 of the ratchet mechanism 160 keeps the shift cam 158 in specified positions.

The shift shaft 159 moves rotationally in a predetermined direction through a device such as described below.

A distal end 159a of the shift shaft 159 projects from the engine case 152 to the outside of the engine, and is provided with an actuation force transmission mechanism 164. The shift shaft 159 is rotated by driving force of the shift actuator 165 via the actuation force transmission mechanism 164.

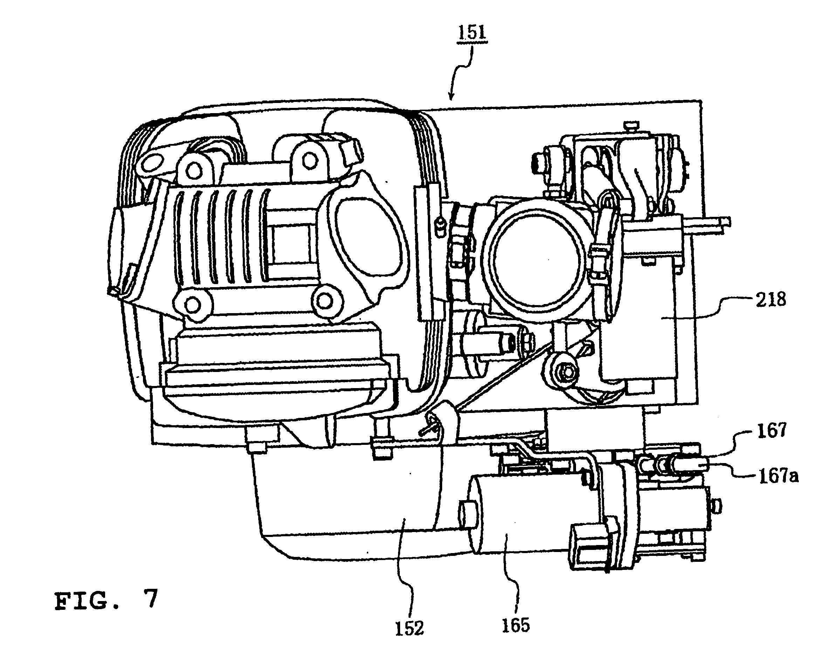

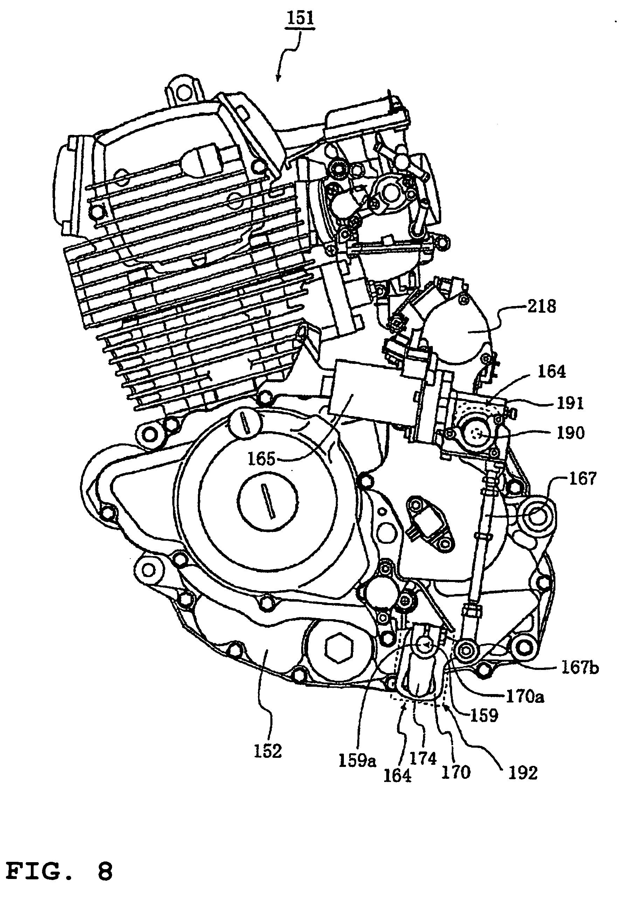

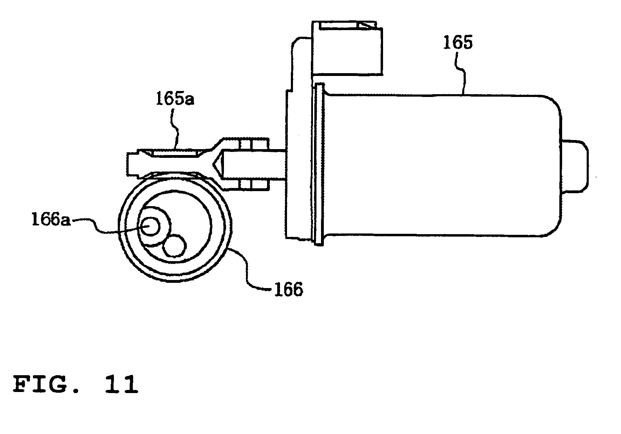

As shown in FIGs. 7 and 8, the shift actuator 165 is disposed on a side of the upper part of the engine case 152 along the longitudinal direction of the vehicle. As shown in FIG. 11, the shift actuator 165 is provided with a worm gear 165a at the distal end of its rotary shaft. The worm gear 165a is meshed with a pinion gear 166. A coupling shaft 166a is provided eccentrically with respect to the center axis of the pinion gear 166.

One end 167a of a coupling rod 167 extending vertically is coupled to the coupling shaft 166a for free rotation as shown in FIG. 7, while the other end 167b of the coupling rod 167 is coupled to the actuation force transmission (conveyance) mechanism 164 as shown in FIG. 8.

The coupling rod 167 may be constituted with two halves, one having a male-threaded end and the other having a female-threaded end, and the two halves may be coupled to each other by screwing and then fixing them with a nut. This structure allows adjustment of the distance between the shift actuator 165 and the shift shaft 159 by loosening the nut and rotating one half of the coupling rod 167 to adjust its length, and then tightening the nut again.

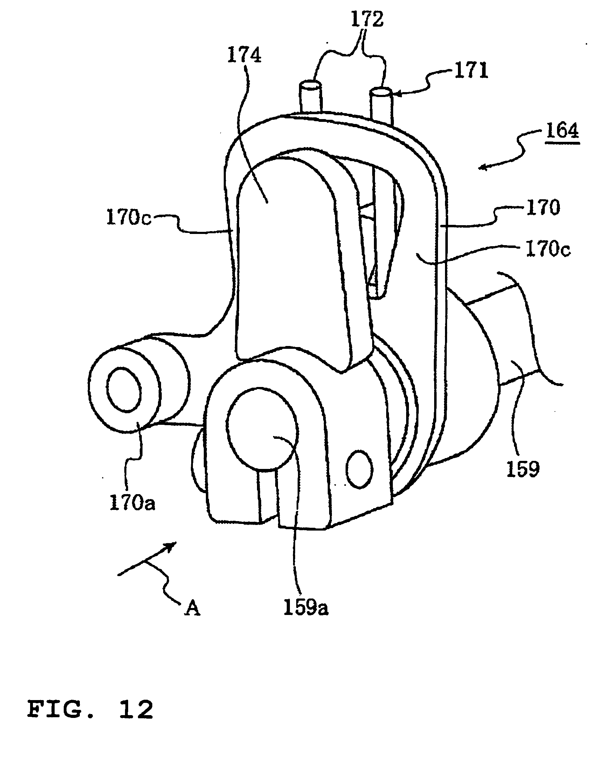

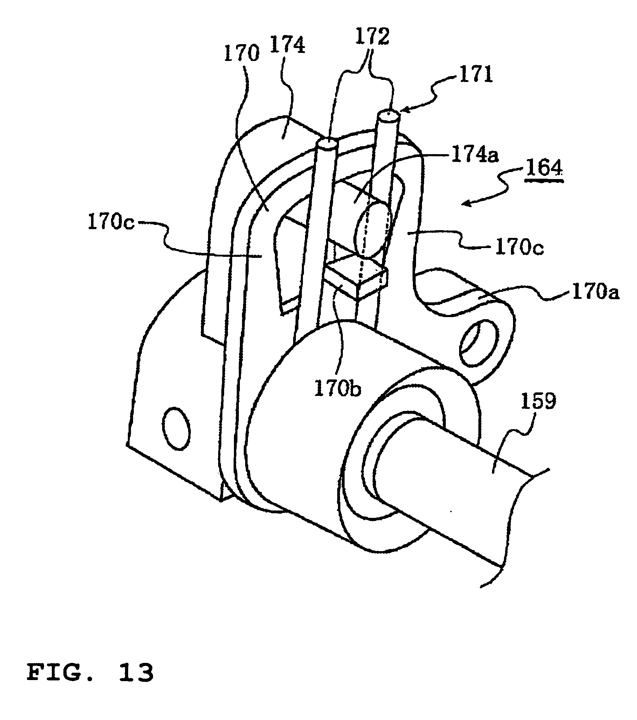

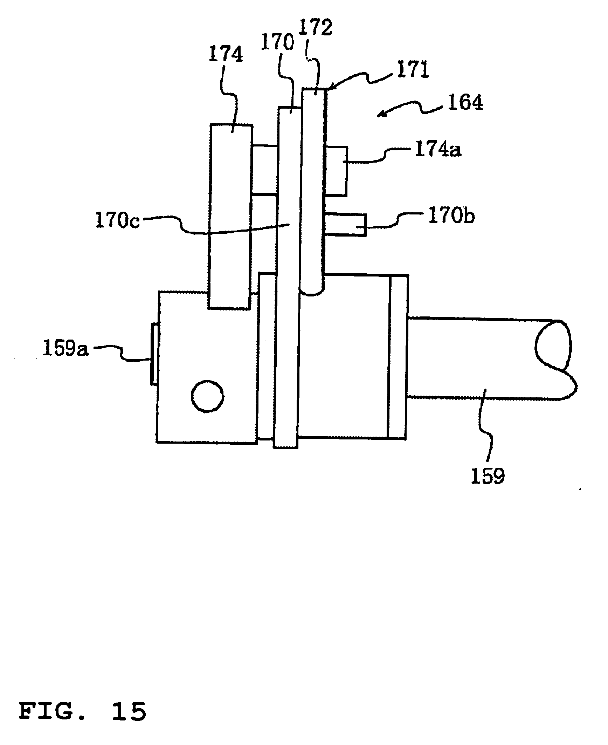

As shown in FIGs. 12 to 16, in the actuation force transmission mechanism 164, a rotary frame 170, to which the other end 167b of the coupling rod 167 is coupled, is disposed around the shift shaft 159 for free rotation. The other end 167b of the coupling rod 167 is coupled to a coupling recess 170a of the rotary frame 170 for free rotation. The rotary frame 170 is provided with an actuation piece 170b bent to project therefrom. The actuation piece 170b is inserted between two support bars 172 of a pine needle-like spring 171 as an "urging means". The two support bars 172 urge the actuation piece 170b toward the neutral position shown in FIGs. 13 and 15.

Also, in the actuation force transmission mechanism 164, a fixed lever 174 is fixed to the distal end 159a of the shift shaft 159. The fixed lever 174 is provided with a pin-to-be-pressed 174a projecting therefrom, and is inserted between the pair of support bars 172.

With this structure, when the rotary frame 170 is moved rotationally in an arbitrary direction from the neutral position, the actuation piece 170b presses one of the two support bars 172 while the other of the support bars 172 presses the pin-to-be-pressed 174a, so that the shift shaft 159 is moved rotationally in an arbitrary direction by a predetermined amount via the fixed lever 174. At this time, the shift shaft 159 is moved rotationally by the urging force of the support bars 172.

When the rotary frame 170 is further moved rotationally from that state against the urging force of the spring bars 171, 172 to be moved relative to the fixed lever 174 by a predetermined amount in a rotational direction, the pin-to-be-pressed 174a of the fixed lever 174 is contacted and hence pressed by one of a pair of stopper edges 170c, 170c of the rotary frame 170 as a "stopper means". Thus, the relative movement of the rotary frame 170 and the fixed lever 174 in a rotational direction is stopped and the rotational force of the rotary frame 170 acts directly on the fixed lever 174, so that the shift shaft 159 moves rotationally together with the fixed lever 174.

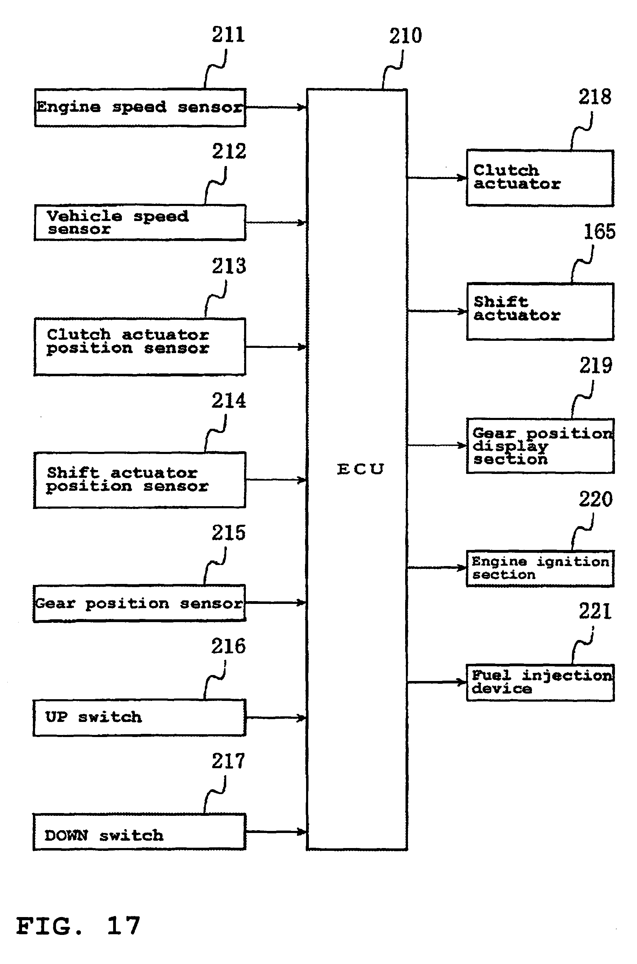

Meanwhile, an engine control unit 210 for controlling the engine 151 is provided as shown in FIG. 17. To the engine control unit 210 are connected an engine speed sensor 211, a vehicle speed sensor 212, a clutch actuator position sensor (potentiometric sensor) 213, a shift actuator position sensor 214, a gear position sensor 215, an UP switch 216 for shifting up, and a DOWN switch 217 for shifting down. Detected values and operation signals from these components are input to the engine control unit 210. The UP switch 216 and the DOWN switch 217 are provided on the handlebars 143.

The engine control unit 210 is connected to a clutch actuator 218, the shift actuator 165, a gear position display section 219, an engine ignition section 220, and a fuel injection device 221, which are driven and controlled based on the signals from the various sensors 211, etc.

The signals from the UP switch 216, the DOWN switch 217, the shift actuator position sensor 214, the gear position sensor 215, etc., are input to the engine control unit 210, and control signals from the engine control unit 210 are used to drive and control the shift actuator 165.

Next, the function will be described.

To change speeds of the transmission, the UP switch 216 or the DOWN switch 217 provided on the handlebars 143 is operated to actuate the shift actuator 165 so as to rotate the worm gear 165a in a predetermined direction by a predetermined amount.

Then, the pinion gear 166 shown in FIG. 11 rotates in a predetermined direction and the coupling shaft 166a disposed eccentrically with respect to the pinion gear 166 moves rotationally, so that the coupling rod 167 is pushed downward or pulled upward.

As the rotary frame 170 moves rotationally in a predetermined direction via the coupling rod 167, the actuation piece 170b of the rotary frame 170 presses one of the two support bars 172. This causes the other of the support bars 172 to elastically press the pin-to-be-pressed 174a of the fixed lever 174, which in turn moves the shift shaft 159 rotationally in a predetermined direction via the fixed lever 174.

When the shift shaft 159 is moved rotationally in this way, the shift cam 158 is moved rotationally in a predetermined direction via the ratchet mechanism 160, and the shift forks 156 are guided by the cam grooves 158a to slide in predetermined directions. Thus, the slide gears of the transmission are moved, and the dog for a predetermined gear is disengaged while the dog for another is engaged.

When the dog is to be engaged, there are cases where the dog contacts another dog due to bad timing and hence is not engaged immediately. Even in such cases, the dogs are subjected to comparatively small urging force of the two support bars 172 and hence do not abut against each other with large force. Thus, the components are protected from damage or the like. After that, the slide gears move rotationally slightly, and the urging force of the rotational movement causes the dogs to be meshed with each other reliably.

At the time when the two support bars 172 are elastically deformed and the rotary frame 170 and the fixed lever 174 are moved relatively in a rotational direction by a predetermined amount, one of the stopper edges 170c of the rotary frame 170 contacts the pin-to-be-pressed 174a of the fixed lever 174. This causes the rotary frame 170 and the fixed lever 174 to move rotationally together. Thus, even when the dog is engaged and difficult to be disengaged due to residual torque, the dog can be compulsorily disengaged.

To put it in other words, with a simple modification of the structure, the dog can be disengaged and engaged reliably and easily without precise control, even in the case where the shift operation is performed not manually but mechanically using the shift actuator 165.

The actuation force transmission mechanism 164 is disposed on the axis of the shift shaft 159 as shown in FIG. 8, thereby achieving a compact structure. The actuation force transmission mechanism 164, which is disposed outside the engine 151, can be protected from water and dust easily by providing a case 192 for covering it.

The actuation force transmission mechanism 164 can be disposed on the axis of a gear shaft 190 of a damping mechanism 191 coupled to the shift actuator 165 as shown in FIG. 8, rather than on the axis of the shift shaft 159.

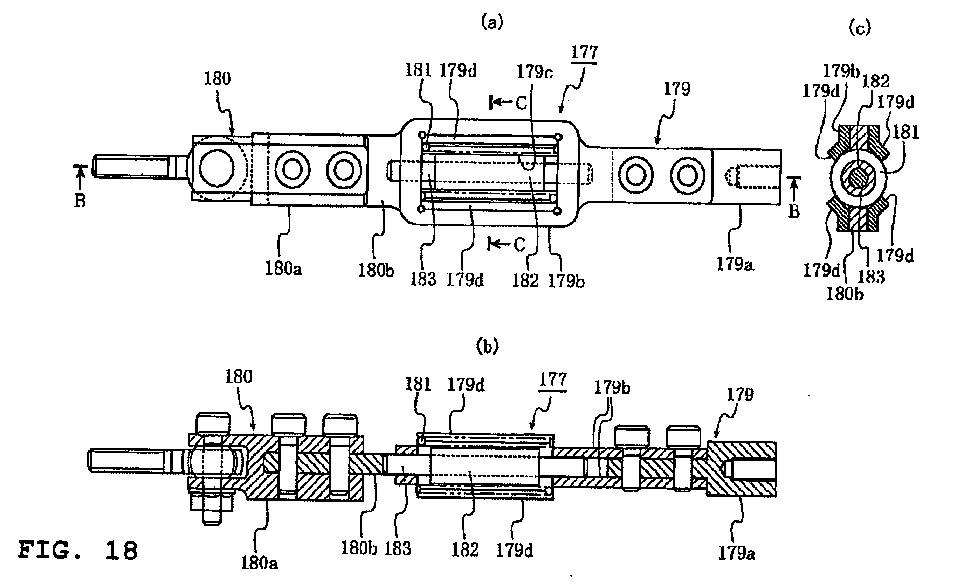

Next, FIGs. 18 to 21 show another specific structure of the shift control device of the present invention. The structure to be described here is different from the above-described structure in respect to an actuation force transmission mechanism 177.

That is, while the above-described actuation force transmission mechanism 164 drives rotationally, the actuation force transmission mechanism 177 to be described here drives linearly. The actuation force transmission mechanism 177 is provided in place of the coupling rod 167 in the above-described structure, and the actuation force transmission mechanism 164 is not provided in the structure to be described here.

As shown in FIGs. 18 to 21, the actuation force transmission mechanism 177 is provided with first and second coupling parts 179, 180 slidably movable relative to each other in linear directions. A coil spring 181 as an "urging means" and a stopper member 182 are disposed between the first and second coupling parts 179, 180.

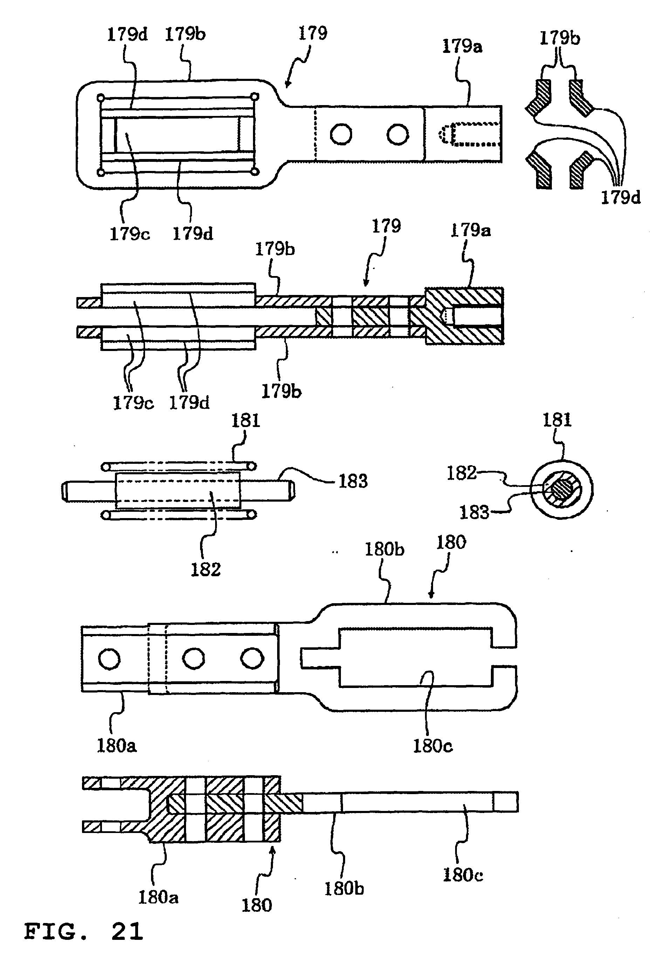

As shown in FIG. 21, the first coupling part 179 includes a base part 179a, and a pair of plate parts 179b fixed to the base part 179a with a constant interval. The two plate parts 179b are formed with an opening 179c where the coil spring 181 and the stopper member 182 are disposed, and with a coming-off prevention piece 179d for preventing the coil spring 181 and the stopper member 182 from coming off.

Also as shown in FIG. 21, the second coupling part 180 includes a base part 180a, and a single plate part 180b fixed to the base part 180a. The single plate part 180b can be inserted between the pair of plate parts 179b of the first coupling part 179. The plate part 180b is also formed with an opening 180c generally of the same size as the opening 179c of the plate parts 179b of the first coupling part 179.

The coil spring 181 is accommodated in the openings 179c, 180c of the respective plate parts 179b, 180b, and the columnar stopper member 182 is disposed inside the coil spring 181. A support shaft 183 is slidably inserted through the stopper member 182, and disposed between the plate parts 179b.

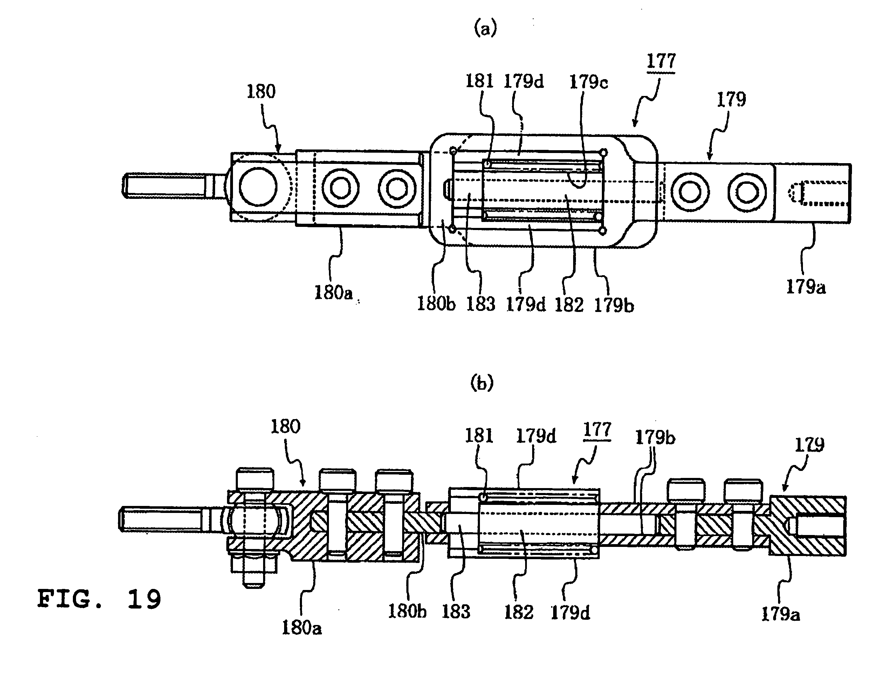

With this structure, to shift down, for example, the shift actuator 165 is driven to move the first and second coupling parts 179, 180 of the actuation force transmission mechanism 177 in compressing directions, and the coil spring 181 is compressed against its urging force from the state shown in FIG. 18 to the state shown in FIG. 19. This urging force rotates the shift shaft 159 to allow engagement or disengagement of the dog.

When the dog is to be engaged, there are cases where the dog contacts another dog due to bad timing and hence is not engaged immediately. Even in such cases, the dogs are subjected to comparatively small urging force of the coil spring 181 and hence do not abut against each other with large force. Thus, the components are protected from damage or the like. After that, the slide gears move rotationally slightly, and the urging force of the rotational movement causes the dogs to be meshed with each other reliably.

As the coil spring 181 is elastically deformed and compressed, the opening 179c of the plate parts 179b and the opening 180c of the plate part 180b are displaced from each other. At the time when the first and second coupling parts 179, 180 have moved relatively by a predetermined amount in linear directions, the width of an opening common to the displaced openings 179c, 180c becomes coincident with the width of the stopper member 182. This stops the relative movement of the first and second coupling parts 179, 180, and causes the first and second coupling parts 179, 180 to move rotationally together. Thus, even when the dog is engaged and difficult to be disengaged due to residual torque, the dog can be compulsorily disengaged.

On the other hand, to shift up, for example, the shift actuator 165 is driven to relatively move the first and second coupling parts 179, 180 in separating directions.. Then, the opening 179c of the plate parts 179b and the opening 180c of the plate part 180b are displaced from the generally coincident position, and the coil spring 181 is compressed. The urging force of the coil spring 181 ensures engagement of the dog as described above.

Further from this state, as the coil spring 181 is elastically deformed, the opening 179c of the plate parts 179b and the opening 180c of the plate part 180b are displaced from each other. At the time when the first and second coupling parts 179, 180 have moved relatively by a predetermined amount in separating directions, the width of an opening common to the displaced openings 179c, 180c becomes coincident with the width of the stopper member 182. This stops the relative movement of the first and second coupling parts 179, 180, and causes the first and second coupling parts 179, 180 to move rotationally together. Thus, even when the dog is engaged and difficult to be disengaged due to residual torque, the dog can be compulsorily disengaged.

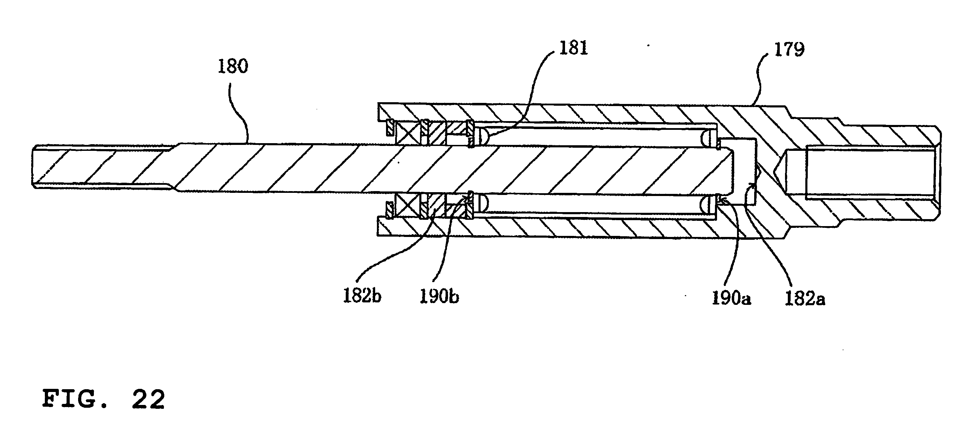

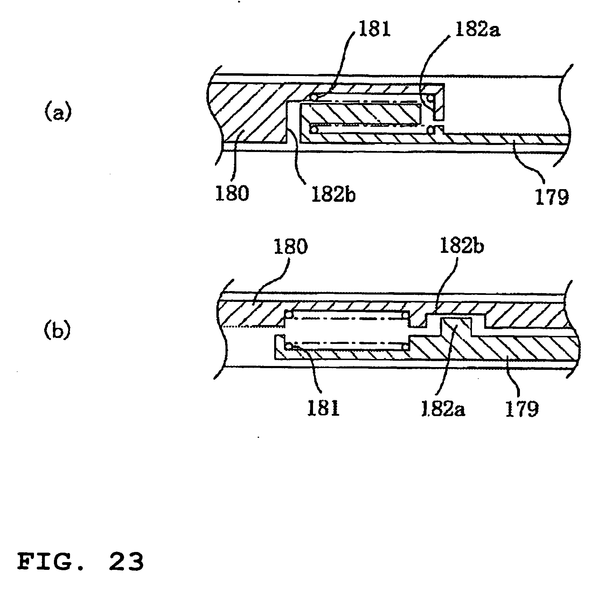

The first coupling part 179, the second coupling part 180 and the stopper member 182 of various structures are conceivable. Some examples are shown in FIGs. 22, 23(a) and 23(b).

In the example shown in FIG. 22, the second coupling part 180 is constituted of a rod, and the first coupling part 179 is constituted of a cylindrical member for accommodating a part of the rod. The coil spring 181 as an urging means is disposed between the first coupling part (cylindrical member) 179 and the second coupling part (rod) 180. A sidewall 182a inside the first coupling part 179 and a step 182b provided on the inner surface of the first coupling part 179 respectively serve as stopper members when the second coupling part 180 moves relative to the first coupling part 179.

For example, when the second coupling part 180 moves relative to the first coupling part 179 toward the right side of FIG. 22, the coil spring 181 is compressed by a circlip 190b embedded in a portion of the first coupling part 179. The second coupling part 180 moves relatively until its distal end contacts the sidewall (stopper member) 182a inside the first coupling part 179.

Also, when the second coupling part 180 moves relative to the first coupling part 179 toward the left side of FIG. 22, the coil spring 181 is compressed by a circlip 190a embedded in a portion of the first coupling part 179. The second coupling part 180 moves relatively until the circlip 190b embedded in a portion of the first coupling part 179 contacts the step (stopper member) 182b provided on the inner surface of the first coupling part 179.

The rod and the cylindrical member constituting the first coupling part 179 and the second coupling part 180 may be of a circular, rectangular or any other shape as long as the cylindrical member can accommodate the rod. The rod may have portions of different diameters, and a portion of a large diameter may be used as a part contacted by the spring.

In addition, the cylindrical member may be constituted with plural members having inner and outer surfaces. For example, the cylindrical member may be constituted with plural semi-cylindrical members divided along the linear direction of the rod. In this case, the cylindrical member includes plural cylindrical members.

In the example shown in FIG. 23(a), the distal end of the first coupling part 179 is bent back and inserted into an opening of the second coupling part 180. Sidewalls 182a, 182b of the opening are used as stopper members. In the example shown in FIG. 23 (b), a coil spring 181 is provided in an opening defined by the first coupling part 179 and the second coupling part 180. A projection 182a formed on the first coupling part 179 and a recess 182b formed in the second coupling part 180 are fitted to each other to serve as stopper members.

The shift control device in the present invention may be mounted on a two-wheeled motor vehicle shown in FIG. 6 to allow smooth shift change when the two-wheeled motor vehicle is running.

The term "two-wheeled motor vehicle" used herein means motorcycles including motorized bicycles (motorbikes) and scooters, and refers specifically to vehicles which can be turned by tilting the vehicle body. Thus, vehicle having two or more front wheels and/or two or more rear wheels and hence having a total of three or four (or more) wheels can be included in the "two-wheeled motor vehicle". The present invention is not limited to use in two-wheeled motor vehicles, but may also be applied to other vehicles which can take advantage of the effect of the present invention. Examples of such vehicles include the so-called straddle-type vehicles other than two-wheeled motor vehicles, such as four-wheeled buggies (all terrain vehicles (ATVs)) and snowmobiles.

The "shift actuator" may be of an electric or hydraulic type. Instead of pine needle-like spring or coil spring, the "urging means" may be another type of spring, or an elastic member, such as rubber and resin.

When the present invention is to be applied to actual straddle-type vehicles, specific implementations should be examined from a comprehensive viewpoint which allows for each and every requirement in order to produce an excellent effect such as described above.

Industrial Applicability

It is provided an easy-to-maintain shift control device for a straddle-type vehicle, utilizing an existing structure.

**Claims**

1. Straddle-type vehicle comprising an engine having an engine case and comprising a shift control device for controlling a transmission of the straddle-type vehicle to change speeds, said shift control device comprising a shift actuator configured to rotate a shift shaft for performing shift control, and an actuation force transmission mechanism (10) interposed between the shift actuator and the shift shaft, said actuation force transmission mechanism (10) comprising first and second coupling parts (11a, 11b), an urging means (12, 12a, 12b) and a stopper mechanism (13, 13a, 13b), wherein the coupling parts (11a, 11b) are coupled to each other, the urging means (12, 12a, 12b) is configured to hold the coupling parts (11a, 11b) in a neutral position, and said coupling parts (11a, 11 b) are movable relative to each other around the neutral position against an urging force of the urging means (12, 12a, 12b) within limits defined by the stopper mechanism (13, 13a, 13b), wherein the actuation force transmission mechanism (10) is arranged such that, when resistive force acts against movement of the actuation force transmission mechanism (10), the first or second coupling part (11a, 11 b) moves relatively against the urging force of the urging means (12, 12a, 12b) until the first or second coupling part (11a, 11b) is stopped by the stopper mechanism (13, 13a, 13b), and then the first and second coupling parts (11a, 11b) move together, **characterized in that** the actuation force transmission mechanism (10) is disposed outside of the engine case.

2. Straddle-type vehicle according to claim 1, wherein shift control is performed such that the shift actuator is stroked by a predetermined amount to rotate the shift shaft, and a dog is engaged and disengaged by the rotation of the shift shaft.

3. Straddle-type vehicle according to one of the claims 1 or 2, wherein the first and second coupling parts (11a, 11b) are coupled for movement relative to each other in sliding directions, in particular in linear directions.

4. Straddle-type vehicle according to one of claims 1 to 3, wherein the urging means includes a compression spring.

5. Straddle-type vehicle according to one of the claims 1 or 2, wherein the first and second coupling parts (11a, 11b) are coupled for movement relative to each other in rotating directions.

6. Straddle-type vehicle according to claim 5, wherein the urging means includes a pine needle-like spring.

7. Straddle-type vehicle according to claim 5 or 6, wherein the actuation force transmission mechanism (10) is disposed on the shift shaft.

8. Straddle-type vehicle according to claim 7, wherein the actuation force transmission mechanism (10) is disposed on a gear shaft of a speed reduction mechanism coupled to the shift actuator.

9. Straddle-type vehicle according to one of the claims 1 to 3, wherein the shift actuator is coupled to the shift shaft via a coupling mechanism for transmitting actuation force of the shift actuator, and the actuation force transmission mechanism (10) is held by the coupling mechanism.

10. Straddle-type vehicle according to one of the claims 1 to 9, wherein the shift actuator is coupled to the shift shaft via a coupling mechanism for transmitting actuation force of the shift actuator, and the coupling mechanism is of adjustable length.


**Patentansprüche**

1. Fahrzeug vom Spreizsitz- Typ, aufweisend eine Brennkraftmaschine mit einem Motorgehäuse und aufweisend eine Schaltsteuervorrichtung zum Steuern eines Getriebes des Fahrzeuges vom Spreizsitz- Typ, um die Gänge zu verändern, wobei die Schaltsteuervorrichtung einen Schaltbetätiger aufweist, konfiguriert eine Schaltwelle zum Ausführen einer Schaltsteuerung zu drehen, und eine Betätigungskraft- Übertragungsvorrichtung (10), eingesetzt zwischen den Schaltbetätiger und die Schaltwelle, wobei die Betätigungskraft- Übertragungsvorrichtung (10) aufweist erste und zweite Kupplungsteile (11a, 11b), eine Vorspanneinrichtung (12, 12a, 12b) und eine Stoppervorrichtung (13, 13a, 13b), wobei die Kupplungsteile (11a, 11b) miteinander gekuppelt sind, die Vorspanneinrichtung (12, 12a, 12b) konfiguriert ist, die Kupplungsteile (11a, 11 b) in einer neutralen Position zu halten, und die Kupplungsteile (11a, 11b) in Bezug zueinander rund um die neutrale Position gegen die Druckkraft der Druckeinrichtung (12, 12a, 12b) innerhalb von Grenzen, festgelegt durch die Stoppervorrichtung (13, 13a, 13b), bewegbar sind, wobei die Betätigungskraft- Übertragungsvorrichtung (10) derart angeordnet ist, dass wenn eine Widerstandkraft gegen die Bewegung der Betätigungskraft- Übertragungsvorrichtung (10) wirkt, sich das erste oder zweite Kupplungsteil (11a, 11b) relativ gegen die Druckkraft der Druckeinrichtung (12, 12a, 12b) bewegt, bis das erste oder zweite Kupplungsteil (11a, 11b) durch die Stoppervorrichtung (13, 13a, 13b) gestoppt ist und dann sich das erste oder zweite Kupplungsteil (11a, 11b) gemeinsam bewegen, **dadurch gekennzeichnet, dass** die Betätigungskraft- Übertragungsvorrichtung (10) außerhalb der Motorgehäuses angeordnet ist.

2. Fahrzeug vom Spreizsitz- Typ nach Anspruch 1, wobei die Schaltsteuerung derart ausgeführt wird, dass der Schaltbetätiger um einen vorbestimmten Hubbetrag bewegt wird, um die Schaltwelle zu drehen, und ein Mitnehmer durch die Drehung der Schaltwelle im Eingriff ist oder außer Eingriff kommt.

3. Fahrzeug vom Spreizsitz- Typ nach einem der Ansprüche 1 oder 2, wobei die ersten und zweiten Kupplungsteile (11a, 11 b) gekuppelt sind zur Bewegung relativ zueinander in Gleitrichtungen, insbesondere in linearen Richtungen.

4. Fahrzeug vom Spreizsitz- Typ nach einem der Ansprüche 1 bis 3, wobei die Vorspanneinrichtung eine Vorspannfeder enthält.

5. Fahrzeug vom Spreizsitz- Typ nach einem der Ansprüche 1 oder 2, wobei die ersten und zweiten Kupplungsteile (11a, 11 b) gekuppelt sind zur Bewegung relativ zueinander in Drehrichtungen.

6. Fahrzeug vom Spreizsitz- Typ nach Anspruch 5, wobei die Druckeinrichtung eine nadelartige Feder enthält.

7. Fahrzeug vom Spreizsitz- Typ nach Anspruch 5 oder 6, wobei die Betätigungskraft-Übertragungsvorrichtung (10) auf der Schaltwelle angeordnet ist.

8. Fahrzeug vom Spreizsitz- Typ nach Anspruch 7, wobei die Betätigungskraft- Übertragungsvorrichtung (10 auf einer Getriebewelle einer Drehzahlreduzierungsvorrichtung, gekuppelt mit dem Schaltbetätiger, angeordnet ist.

9. Fahrzeug vom Spreizsitz- Typ nach einem der Ansprüche 1 bis 3, wobei der Schaltbetätiger gekuppelt ist mit der Schaltwelle über eine Kupplungsvorrichtung zum Übertragen der Betätigungskraft des Schaltbetätigers und die Betätigungskraft-Übertragungsvorrichtung (10) durch die Kupplungsvorrichtung gehalten wird.

10. Fahrzeug vom Spreizsitz- Typ nach einem der Ansprüche 1 bis 9, wobei der Schaltbetätiger gekuppelt ist mit der Schaltwelle über eine Kupplungsvorrichtung zum Übertragen der Betätigungskraft des Schaltbetätigers und die Betätigungskraft-Übertragungsvorrichtung (10) durch die Kupplungsvorrichtung von einstellbarer Länge ist.

**Revendications**

1. véhicule de type à enfourcher comprenant un moteur ayant un carter de moteur et comprenant un dispositif de commande de changement de vitesse pour commander une transmission du véhicule de type à enfourcher pour changer les vitesses, ledit dispositif de commande de changement de vitesse comprenant un dispositif d'actionnement de changement de vitesse configuré pour faire tourner un arbre de changement de vitesse afin d'effectuer une commande de changement de vitesse, et un mécanisme de transmission de force de mise en action (10) interposé entre le dispositif d'actionnement de changement de vitesse et l'arbre de changement de vitesse, ledit mécanisme de transmission de force de mise en action (10) comprenant des premier et second éléments d'accouplement (11a, 11b), un moyen de poussée (12, 12a, 12b) et un mécanisme de butée (13, 13a, 13b), dans lequel les éléments d'accouplement (11a, 11b) sont accouplés l'un à l'autre, le moyen de poussée (12, 12a, 12b) est configuré pour maintenir les éléments d'accouplement (11a, 11b) dans une position neutre, et lesdits éléments d'accouplement (11a, 11b) sont mobiles l'un par rapport à l'autre autour de la position neutre contre une force de poussée du moyen de poussée (12, 12a, 12b) dans des limites définies par le mécanisme de butée (13, 13a, 13b), dans lequel le mécanisme de transmission de force de mise en action (10) est agencé de sorte que, lorsqu'une force de résistance agit contre le déplacement du mécanisme de transmission de force de mise en action (10), le premier ou le second élément d'accouplement (11a, 11b) se déplace de manière relative contre la force de poussée du moyen de poussée (12, 12a, 12b) jusqu'à ce que le premier ou le second élément d'accouplement (11a, 11b) soit arrêté par le mécanisme de butée (13, 13a, 13b), et ensuite les premier et second éléments d'accouplement (11a, 11b) se déplacent ensemble, **caractérisé en ce que** le mécanisme de transmission de force de mise en action (10) est disposé à l'extérieur du carter de moteur.

**2.** véhicule de type à enfourcher selon la revendication 1, dans lequel une commande de changement de vitesse est effectuée de sorte que le dispositif d'actionnement de changement de vitesse est soulevé d'une quantité prédéterminée pour faire tourner l'arbre de changement de vitesse, et un crabot est mis en prise et dégagé par la rotation de l'arbre de changement de vitesse.

**3.** véhicule de type à enfourcher selon l'une des revendications 1 ou 2, dans lequel les premier et seconde éléments d'accouplement (11a, 11b) sont accouplés pour un déplacement l'un par rapport à l'autre dans des directions de coulissement, en particulier dans des directions linéaires.

**4.** véhicule de type à enfourcher selon l'une des revendications 1 à 3, dans lequel le moyen de poussée comporte un ressort de compression.

**5.** véhicule de type à enfourcher selon l'une des revendications 1 ou 2, dans lequel les premier et second éléments d'accouplement (11a, 11b) sont accouplés pour un déplacement l'un par rapport à l'autre dans des directions de rotation.

**6.** véhicule de type à enfourcher selon la revendication 5, dans lequel le moyen de poussée comporte un ressort semblable à une aiguille de pin.

**7.** véhicule de type à enfourcher selon la revendication 5 ou 6, dans lequel le mécanisme de transmission de force de mise en action (10) est disposé sur l'arbre de changement de vitesse.

**8.** véhicule de type à enfourcher selon la revendication 7, dans lequel le mécanisme de transmission de force de mise en action (10) est disposé sur un arbre de transmission d'un mécanisme de réduction de vitesse accouplé au dispositif d'actionnement de changement de vitesse.

**9.** véhicule de type à enfourcher selon l'une des revendications 1 à 3, dans lequel le dispositif d'actionnement de changement de vitesse est accouplé à l'arbre de changement de vitesse par l'intermédiaire d'un mécanisme d'accouplement pour transmettre une force de mise en action du dispositif d'actionnement de changement de vitesse, et le mécanisme de transmission de force de mise en action (10) est maintenu par le mécanisme d'accouplement.

**10.** Véhicule de type à enfourcher selon l'une des revendications 1 à 9, dans lequel le dispositif d'actionnement de changement de vitesse est accouplé à l'arbre de changement de vitesse par l'intermédiaire d'un mécanisme d'accouplement pour transmettre une force de mise en action du dispositif d'actionnement de changement de vitesse, et le mécanisme d'accouplement a une longueur réglable.

FIG. 1

FIG. 2

FIG. 3

Rotational
angle of
shift shaft

① ② ③ ④ ⑤ ⑥

Stroke length of shift actuator

FIG. 4

(a)

(b)

FIG. 5

FIG. 6

FIG. 7

EP 1 767 831 B1

FIG. 8

FIG. 9

FIG. 10

FIG. 11

FIG. 12

FIG. 13

FIG. 14

FIG. 15

159

164

170b

170a   170

172

171

174a

174

159a

FIG. 16

211

**Engine speed sensor**

210

212

**Vehicle speed sensor**

213

**Clutch actuator position sensor**

214

**Shift actuator position sensor**

ECU

215

**Gear position sensor**

216

**UP switch**

217

**DOWN switch**

218

**Clutch actuator**

165

**Shift actuator**

219

**Gear position display section**

220

**Engine ignition section**

221

**Fuel injection device**

# FIG. 17

30

FIG. 18

(a)

(b)

FIG. 19

EP 1 767 831 B1

32

FIG. 20

FIG. 21

FIG. 22

EP 1 767 831 B1

(a)

181    182a

180    182b    179

(b)

180    182b

181    182a    179

FIG. 23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1138546 A
- JP 3044498 B
- JP 5039865 A
- JP SHO4311555 Y